# EUROPÄISCHE PATENTSCHRIFT

(11) **EP 0 804 043 B1**
(45) Veröffentlichungstag und Bekanntmachung des Hinweises auf die Patenterteilung: **20.07.2005**
(21) Anmeldenummer: 96119547.6
(22) Anmeldetag: 05.12.1996
(51) Int. Cl.: H04Q 1/14, H05K 5/02, H01R 13/52

(54) **Schutzhaube für Module der Telekommikationstechnik**
Protective cover for modules in telecommunication technology
Capot de protection pour modules dans la technique des télécommunications

(30) Priorität: 23.04.1996 DE 29607356 U
(43) Veröffentlichungstag der Anmeldung: 29.10.1997
(73) Patentinhaber: QUANTE AG, 42109 Wuppertal (DE)
(72) Erfinder: Gärtner, Norbert, 42285 Wuppertal (DE); Wildner, Stefan, 42349 Wuppertal (DE); Otto, Hans-Dieter, 51688 Wipperfürth (DE)
(74) Vertreter: Füchsle, Klaus, Dipl.-Ing.

(56) Entgegenhaltungen:
- EP-A- 0 563 996
- FR-A- 2 662 030
- US-A- 4 734 061
- US-A- 5 227 581
- US-A- 5 277 622

## Beschreibung

Die Erfindung betrifft eine Schutzhaube für Module der Telekommunikationstechnik. Insbesondere ist die erfindungsgemäße Schutzhaube für Trenn- oder Anschlußleisten geeignet, die in der Telekommunikationstechnik weit verbreitet sind und in der Regel mehrere, in Reihen angeordnete Kontakte aufweisen.

Derartige Trenn- oder Anschlußleisten finden ihre Verwendung in sogenannten Verteilereinrichtungen, in denen einerseits die von Fernmeldeämtern oder Schalteinrichtungen kommenden Kabel und andererseits die zu einzelnen Haushalten oder Nebenstellen führenden Kabel abgeschlossen sind. Dieser Abschluß erfolgt jeweils an den eingangs beschriebenen Trennleisten.

Zwischen einzelnen Trenn- oder Anschlußleisten werden innerhalb der Verteilereinrichtung sogenannte Rangierleitungen geführt, um somit die zu einzelnen Haushalten oder Nebenstellen führenden Fernmeldekabel den einzelnen Amtsleitungen zuzuordnen.

In jüngster Zeit werden in den beschriebenen Verteilereinrichtungen neben den passiven Anschlusselementen zunehmend aktive Gerate für die Übertragungssysteme eingebaut. Diese erwärmen sich üblicherweise im Betrieb and müssen durch Konvektionsbelüftung in der Verteilereinrichtung gekühlt werden. Es wird also Luft in die Verteilereinrichtung eingebracht und in dieser bewegt and umgewälzt, um die aktiven Bauteile zu kühlen.

Die Luft transportiert Staub in die Verteilereinrichtung. Der eingebrachte Staub kann sich u.a. im Bereich der Kontakte der Trenn- and Anschlussleisten ablagern and verschlechtert insbesondere die Isolationswerte der Anschlusstechnik, wenn er Feuchtigkeit aufnimmt. Aus diesem Grund muss die in der Verteilereinrichtung installierte Anschlusstechnik wirksam gegen die Ablagerung von Staub geschützt werden.

Außerdem treten Anwendungsfälle auf, in denen die Anschlussleisten grundsätzlich gegen Umwelteinflüsse geschützt werden müssen. Dies ist der Fall, wenn die beschriebene Verteilereinrichtung an einer Stelle eingesetzt werden soll, an der regelmäßig eine hohe Luftfeuchtigkeit oder eine besonders aggressive Umgebungsluft vorliegt. Derartige Verhältnisse liegen z.B. vor, wenn die Umgebungsluft stark salzhaltig ist.

In der US 4,734,061 ist eine Anschlussleiste für die Telekommunikationstechnik offenbart, bei der die Korrosion an den Anschlussstellen verhindert wird. In einer Ausführungsform der Erfindung weist die Anschlussleiste einen oberen und einen unteren Körperabschnitt auf, wobei eine Dichtung, in Form eines dünnen, flexiblen Blattes, integral mit dem Körperabschnitt, z. B. über Kleben oder mechanische Spannvorrichtungen, verbunden ist.

In der EP-A-0 563 996 ist ein Verbindungsmodul für eine Telefonleitungsverteilerdose offenbart. Ein Schutzmodul weist ein Gehäuse, einen an dem Gehäuse angebrachten Deckel und Überspannungsschutzelemente auf, wobei der Deckel die Schutzelemente und eine Grundplatte vor Umwelteinflüssen schützt. Das Schutzmodul kann mit einer Anschlussleiste zusammengefügt werden.

Die FR-A-2 662 030 beschreibt ein Schutzgehäuse für Geräte und verschiedenartige Komponenten. Das Gehäuse weist einen Körper, einen Deckel und ein Isoliermittel auf, um das nutzbare, abgeschlossene Volumen gegenüber der Umgebung zu isolieren. Die Isolierung kann beispielsweise über eine Nut-Laschen-Verbindung durchgeführt werden.

Zum Schutz der beschriebenen Module der Telekommunikationstechnik, insbesondere gegen Staubablagerungen, sind zum einen offene Staubschutzhauben bekannt, die jeweils über mehrere Module gesteckt werden. Das Aufstecken erfolgt bei diesen bekannten Hauben von derjenigen Seite der Module, an der sich die Kontakte befinden. Diese Staubschutzhauben sind üblicherweise für zehn mit Abstand übereinander angeordnete Module ausgebildet und weisen im allgemeinen die Form eines rechteckigen Deckels mit seitlich heruntergezogenen Seitenwänden auf. Mit den Seitenwänden erstreckt sich eine derartige Staubschutzhaube an den Stirnseiten der nebeneinanderliegenden Module in etwa bis zu der Höhe der Module, in der sich die Einrichtungen der Module befinden, mit denen sie auf bekannte wannenartige Träger aufgesteckt und auf diesen befestigt sind. Somit sind die beschriebenen Staubschutzhauben in etwa spiegelsymmetrisch zu den wannenartigen Trägern angeordnet, wenn die Ebene der Befestigung der Module an den wannenartigen Trägern die Symmetrieebene bildet.

Diese Staubschutzhauben können jedoch das Eindringen von Staub zu den Kontaktbereichen der Module von unten, also von den wannenartigen Trägern her, nicht verhindern. Zwischen den länglichen, übereinander angeordneten Modulen verbleiben nämlich Zwischenräume, durch die Staub zu den Kontaktbereichen vordringen und sich dort ablagern kann.

Ferner sind Staubschutzkappen bekannt, die jeweils auf einzelnen Modulen lose aufliegen und insbesondere zusammen mit Fett oder Gel für einen Schutz der Module sorgen. Vor allem zur Verbesserung des Korrosionsverhaltens der Kontakte bei extremen klimatischen Bedingungen werden die Module mit Fett oder Gel gefüllt, und diese Füllung wird durch lose aufliegende Kappen geschützt. Diese Schutzkappen verhindern außerdem weitgehend, daß sich Staub auf den ebenfalls mit Fett oder Gel versehenen Kontakten ablagert und an diesen haften bleibt. Eine derartige Schutzanordnung mit einer Schutzkappe und Fett bzw. Gel ist jedoch zum einen teuer und zum anderen unpraktisch und wenig anwenderfreundlich, da im Fall einer Veränderung von Schaltungen das eingefüllte Gel oder Fett mühsam entfernt werden muß. Ferner neigt das Gel oder Fett allgemein dazu, sich im gesamten Innenraum eines Verteilerkastens abzusetzen, so daß Verteilerkästen, in denen mit Fett oder Gel gefüllte Schutzkappen angebracht sind, generell stark verschmutzt sind. Diese Verunreinigungen lassen die Arbeit an derartigen Verteilerkästen zu einer vergleichsweise schmutzigen und mühsamen Angelegenheit werden. Schließlich muß das eingefüllte Fett oder Gel, das aus den lose aufliegenden Schutzkappen ausfließen kann, gegebenenfalls nachgefüllt werden.

In Anbetracht dieser Nachteile bekannter Schutzhauben für Module der Telekommunikationstechnik liegt der vorliegenden Erfindung die Aufgabe (das technische Problem) zugrunde, eine Schutzhaube zu schaffen, die einen wirkungsvollen Schutz, insbesondere gegen die Ablagerung von Staub, gewährleistet, kostengünstig herzustellen und einfach anzuwenden ist.

Die Lösung dieser Aufgabe erfolgt durch eine Schutzhaube mit den Merkmalen des Anspruchs 1.

Demzufolge ist die erfindungsgemäße Schutzhaube auf ein oder mehrere Module aufsteckbar und umfaßt im aufgesteckten Zustand zumindest den Bereich des Moduls, in dem sich die Kontakte befinden. Ferner ist der Schutzhaube ein Dichtelement zugeordnet. Für eine zuverlässige Abdichtung liegt das Dichtungselement in seinen inneren Bereichen weitgehend dichtend an dem Modul oder den Modulen und/oder an den zu den Kontakten des Moduls führenden Kabeln an. Somit sorgt die Schutzhaube gemäß der Erfindung durch die Umfassung und wirkungsvolle Abdeckung des Kontaktbereichs des Modules für eine zuverlässige Abdichtung. Dadurch kann das Eindringen von Staub zu dem Kontaktbereich des Moduls und Staubablagerung in diesem Bereich vermieden werden. Das Dichtungselement kann als einstückiges Bauteil der Schutzhaube, z.B. in Form einer abdichtenden Randkontur gestaltet sein.

Bevorzugt ist das Dichtelement jedoch als eigenes Bauteil ausgebildet, an dessen Außenrand der Rand der Schutzhaube weitgehend dichtend anliegt, um auch an der Schnittstelle zwischen dem Haubenkörper und dem Dichtelement für eine Abdichtung zu sorgen.

Dadurch daß die Ränder der Schutzhaube oder des getrennten Dichtungselements, die zur Abdichtung mit den Oberflächen des Moduls oder den zu dem Modul führenden Kabeln zusammenwirken, weitgehend dichtend an den Kontaktzonen anliegen, sind die Kontakte des einzelnen Moduls wirkungsvoll gegen Staub geschützt. Insbesondere ist für zuverlässigen Schutz gegen Staub keine Füllung mit Fett oder Gel erforderlich, sondern lediglich das Aufstecken der erfindungsgemäßen Schutzhaube. Dennoch kann die Schutzhaube auch in Kombination mit Fett oder Gel verwendet werden, wenn der Anwendungsfall dies erfordern sollte.

Das Aufschieben oder Aufstecken der Schutzhaube erfordert nur einen geringen Montageaufwand. Ferner kann die Schutzhaube durch eine entsprechende Rasteinrichtung zwischen dem zu schützenden Modul und einem Abschnitt der Schutzhaube gesichert werden, so daß ein besonders dauerhafter Schutz erreicht wird.

Vorteilhafte Ausführungsformen der Erfindung finden sich in den weiteren Ansprüchen.

Für die Gestaltung des Dichtungselements wird bevorzugt, daß dieses zumindest eine Aussparung aufweist, die derart ausgebildet ist, daß die Ränder der Aussparung weitgehend dichtend an dem Modul oder den Modulen und/oder an zu den Kontakten des Moduls oder der Module führenden Kabeln anliegen. Die Form der Ausnehmung ist dabei an die Form und Größe des zu schützenden Moduls und gegebenenfalls auf dieses aufgesteckter Bauteile angepaßt. Bei dieser Ausführung umfaßt somit das Innere der Ausnehmung den Kontaktbereich der Module, und der Rand der Ausnehmung sorgt für eine wirkungsvolle Abdichtung.

Es ist vorteilhaft, wenn der Rand der Schutzhaube so gestaltet ist, daß er im wesentlichen in einer Ebene verläuft. In diesem Fall gestaltet sich die Herstellung der erfindungsgemäßen Schutzhaube besonders einfach, und die zuverlässig abdichtende Gestaltung des Randes der Schutzhaube kann besonders einfach ausgebildet werden.

Dies gilt insbesondere dann, wenn gemäß der bevorzugten Ausführungsform die Schutzhaube ein vorzugsweise elastisches Dichtelement aufweist. Üblicherweise wird ein derartiges Dichtelement in denjenigen Bereichen der Schutzhaube ausgebildet, die im angebrachten Zustand zumindest teilweise an dem zu schützenden Modul anliegen, so daß durch die Zusammenwirkung des Dichtelements mit den Oberflächen des Moduls oder eingeführter Kabel ein wirkungsvoller Schutz erreicht wird. Bei Versuchen wurde eine gute Abdichtwirkung bei einer erfindungsgemäßen Schutzhaube festgestellt, die mit einem derartigen Dichtelement versehen war.

Bevorzugt ist das Dichtelement in Form einer Dichtlippe ausgebildet, die durch ihren elastischen Aufbau besonders zuverlässig dichtend anliegt. Allgemein kann das Dichtelement an die Schutzhaube sowohl geklebt, formschlüssig angesteckt oder im 2K-Spritzgußverfahren eingebracht werden. Alternativ ist es möglich, das Dichtelement in Form einer umlaufenden Bürste auszubilden, so daß die einzelnen Borsten staubdicht an den Oberflächen des Moduls anliegen und gegebenenfalls bereichsweise durch eingeführte Kabel derart verformt werden, daß sie in der verformten Lage dichtend an den Oberflächen der Kabel anliegen.

Als vorteilhaft hat es sich ferner erwiesen, das beschriebene Dichtelement um den gesamten Rand der Schutzhaube umlaufend auszubilden. Dies verringert zum einen den Herstellungsaufwand, da lediglich ein einziges, entsprechend bemessenes Dichtelement am Rand der Schutzhaube angebracht werden muß. Ferner ist durch diese Ausbildung des Dichtelements für einen zuverlässigen Schutz in allen Bereichen gesorgt, in denen die erfindungsgemäße Schutzhaube mit dem Modul und Kabeln in Berührung steht und eine Abdichtung gewährleistet.

Eine weitere bevorzugte Ausführungsform der erfindungsgemäßen Schutzhaube weist in den Bereichen, die im angebrachten Zustand zumindest teilweise an dem Modul oder eingeführten Kabeln anliegen, herausnehmbare Teilstücke auf. Die Teilstücke können jeweils insbesondere aus dem Rand der Schutzhaube herausgenommen werden, so daß durch die entstehenden Ausnehmungen Kabel einführbar sind, und der Rand der Ausnehmung mit der Oberfläche eingeführter Kabel zur Abdichtung zusammenwirkt. Besonders wirkungsvoll für die Abdichtung des Kontaktbereichs der Module sind heraustrennbare Teilstücke, deren Größe gemäß einer bevorzugten Ausgestaltung an die Größe von Kabeln angepaßt ist, die zu dem Kontaktbereich des Moduls führen. Dadurch kann die erfindungsgemäße Schutzhaube im Rahmen der Anbringung an ein Modul durch Herausnahme einzelner Teilstücke mit so vielen am Rand der Schutzhaube befindlichen Ausbrüchen versehen werden, wie für die Einführung der erforderlichen Anzahl von Kabeln notwendig ist. Diejenigen Bereiche, an denen keine Teilstücke herausgenommen werden, liegen zuverlässig dichtend an den Oberflächen des Moduls an, während die Ränder der durch Herausnahme der Teilstücke entstehenden Aussparungen an den einführten Kabeln anliegen und ebenfalls für eine gute Abdichtung gegen eindringenden Staub sorgen. Diese Abdichtung muß für eine zufriedenstellende Wirkung nicht unbedingt vollkommen gasdicht sein, es genügt vielmehr eine weitgehende Abdichtung, die bereits das Eindringen von Staub zu den oberen Bereichen der Module, in denen sich die zu schützenden Kontakte befinden, verhindert.

Alternativ kann die Schutzhaube bereits so gestaltet und ausgebildet sein, daß geeignete Ausbrüche für die Durchführung von Kabeln nicht erst herausgebrochen werden müssen, sondern bereits in der Kontur des Randes der Schutzhaube ausgebildet sind. Dadurch kann der Arbeitsaufwand im Rahmen der Anbringung der erfindungsgemäßen Schutzhaube reduziert werden. Gleichzeitig ist die Herstellung einer Schutzhaube mit einer Randkontur, die für die Durchführung von Kabeln geeignet ist, mit geeigneten Herstellungsverfahren und entsprechenden Formen mit geringem Aufwand möglich.

Besondere Vorteile ergeben sich ferner, wenn die erfindungsgemäße Schutzhaube transparent ausgebildet ist. Dadurch ist auch bei angebrachter Schutzhaube die Beschaltung und Bedruckung des Moduls und die Belegung der einzelnen Kontakte sichtbar. Für die Verwendbarkeit mit gängigen, an den Modulen anzubringenden Bauelementen, wie z.B. Trennsteckern, kann die erfindungsgemäße Schutzhaube entsprechend bemessen und mit einem entsprechend großen Hohlraum oder einer entsprechend großen Ausnehmung versehen sein. Wenn in diesem Fall die bevorzugte Ausführungsform einer transparenten Haube Anwendung findet, sind auch bei angebrachter Haube die erwähnten aufgesteckten Bauelemente erkennbar. In dieser Ausführungsform der erfindungsgemäßen Schutzhaube ergeben sich somit besondere Vorteile für den Anwender, da die Beschaltung und die Bestückung mit den üblichen Bauteilen stets erkennbar bleibt.

Ferner ist es für die erfindungsgemäße Schutzhaube vorteilhaft, wenn diese kein eigenes Bauteil darstellt, sondern vielmehr an einem grundsätzlich bekannten oder vorhandenen Bauteil ausgebildet ist, das auf ein zu schützendes Modul aufsteckbar ist. Dadurch kann der Aufwand minimiert werden, der erforderlich ist, um sowohl die Funktion des ohnehin anzubringenden Bauteils als auch die Funktion der Schutzhaube zu erfüllen. Bevorzugt wird in diesem Zusammenhang für das aufsteckbare Bauteil, an dem die Schutzhaube ausgebildet ist, ein Überspannungsmagazin vorgesehen. Dazu ist nur ein geringer Aufwand erforderlich, da die Gehäusekontur des Überspannungsmagazins lediglich auf einfache Weise im unteren Bereich um die oben beschriebene elastische Dichtung oder um herausnehmbare Teilstücke zur Ausbildung einer abdichtenden Kontur ergänzt werden muß.

Demzufolge wird nach einem weiteren Aspekt der Erfindung ein Überspannungsmagazin für ein Modul, insbesondere eine Anschlußleiste, der Telekommunikationstechnik vorgestellt, das die Merkmale einer Schutzhaube aufweist, die in der oben beschriebenen Weise gestaltet ist.

Ferner ist es denkbar, mehrere der erfindungsgemäßen Schutzhauben zu einer Schutzvorrichtung zusammenzuschließen, die auf mehrere Module aufsteckbar ist und gleichzeitig für eine Abdichtung der Kontaktbereiche sämtlicher Module sorgt. Auch im Falle einer derartigen Schutzvorrichtung für mehrere Module liegt jeweils der Rand der einzelnen Ausnehmung oder des einzelnen haubenartigen Abschnitts an dem einzelnen zu schützenden Modul dichtend an, so daß jeweils der Kontaktbereich des einzelnen Moduls umfaßt oder abgedeckt und durch das dichtende Anliegen des Randbereichs gegen Staubablagerung und Umwelteinflüsse geschützt ist.

Nachfolgend wird die Erfindung beispielhaft anhand einer in den Zeichnungen dargestellten Ausführungsform beschrieben. Es zeigen:
- Fig. 1: eine Draufsicht mit Teilschnitt der erfindungsgemäßen Schutzhaube;
- Fig. 2: eine Seitenansicht mit Teilschnitt einer Anordnung mit mehreren angebrachten Schutzhauben; und
- Fig. 3: eine perspektivische Explosionsansicht einer Anordnung mit mehreren Modulen und einer Ausführungsform der Haube, die für den Schutz mehrerer Module ausgebildet ist.

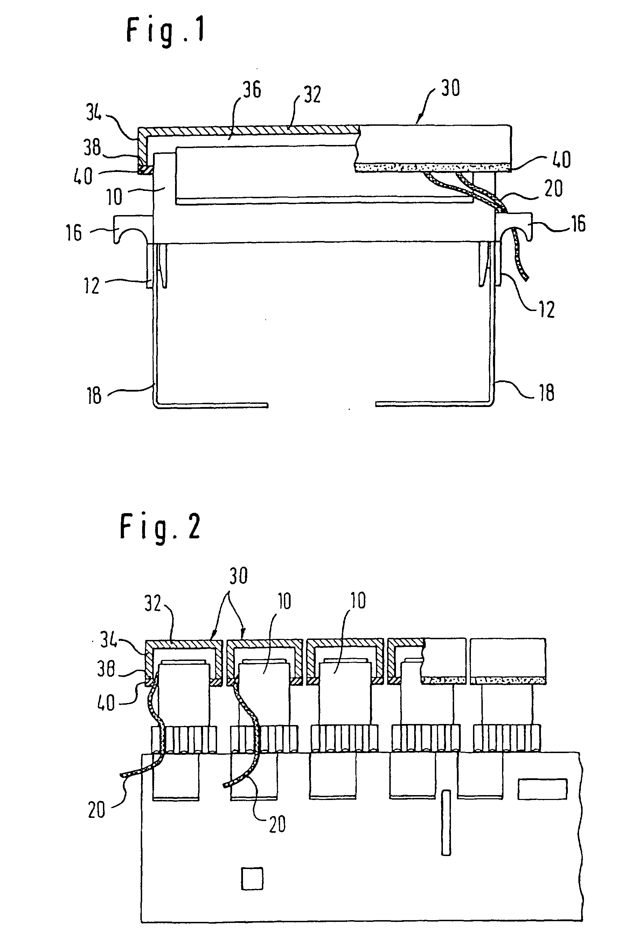

Bei der in Fig. 1 gezeigten Anordnung ist die erfindungsgemäße Schutzhaube 30 auf einer sogenannten SID (Schraub-Isolierungs-Durchdringungs)-Leiste 10 angebracht.

Die SID-Leiste 10 ist auf bekannte Art und Weise über Rasteinrichtungen 12 auf einen wannenartigen Träger 18 aufgesteckt, der in dem gezeigten Fall aus zwei, im Querschnitt L-förmigen Schenkeln besteht. Durch seitlich an der Anschlußleiste 10 angebrachte Kabelführungen 16 sind mehrere Kabel 20 zu dem in der Zeichnung oben befindlichen Bereich der Leiste 10 geführt, in dem sich die (nicht gezeigten) Kontakte der Anschlußleiste 10 befinden.

Dieser Bereich wird von der erfindungsgemäßen Schutzhaube 30 umfaßt. Die Schutzhaube 30 ist im wesentlichen als ein hohler, an einer Seitenfläche offener Quader ausgebildet und weist einen oberen Deckelabschnitt 32 und vier seitliche Wandabschnitte 34 auf. Durch den Deckelabschnitt 32 und die seitlichen Wandabschnitte 34 ist ein Hohlraum oder eine Ausnehmung 36 festgelegt, in der im angebrachten Zustand der Schutzhaube 30 der obere, insbesondere der Kontaktbereich der Leiste 10 aufgenommen ist.

In der gezeigten Ausführungsform ist die erfindungsgemäße Schutzhaube 30 an ihrem Randbereich 38 mit einem umlaufenden Dichtelement 40 versehen. In dem gezeigten Fall sind die seitlichen Wandabschnitte 34 so gestaltet, daß ihre freien Ränder 38, die den Rand der Ausnehmung 36 bilden, in der die Leiste 10 aufgenommen ist, im wesentlichen in einer Ebene liegen. Dies ist insbesondere in dem rechten Abschnitt von Fig. 1 anhand der weitgehend horizontalen Ausrichtung des Dichtelements 40 zu erkennen.

Das um den gesamten Rand der Schutzhaube 30 umlaufend ausgebildete Dichtelement 40 liegt zur Abdichtung gegen Staub weitgehend dichtend an dem zu schützenden Modul, in dem gezeigten Fall die Anschlußleiste 10, an. In der Schnittansicht des linken Bereichs von Fig. 1 ist das abdichtende Anliegen des Dichtelements 40 an der SID-Leiste 10 sichtbar.

Für die Ausbildung der gewünschten Schaltungsverbindungen sind mehrere Kabel 20 über die stirnseitig ausgebildeten Kabelführungen 16 zu den Kontakten der Anschlußleiste 10 geführt. Im rechten Bereich von Fig. 1 sind zwei solcher Kabel 20 angedeutet. Diese Kabel verlaufen üblicherweise, wie gezeigt, von den Kontakten über die Längsseiten der Leiste 10 zu den stirnseitigen Kabelführungen 16, oder sie verlaufen von den Kontakten über die Längsseiten der Leiste 10 zu dem Bereich unterhalb der Anschlußleiste 10 in dem wannenartigen Träger 18. Somit verlaufen die Kabel 20 aus dem abgedichteten Hohlraum 36 der Schutzhaube 30 heraus.

Die erfindungsgemäße Schutzhaube 30 ist jedoch so gestaltet, daß auch an den Stellen, an denen Kabel 20 aus der Schutzhaube 30 herausgeführt werden, für eine zuverlässige Abdichtung gesorgt ist.

Wie in Fig. 2 zu erkennen ist, liegt das elastische Dichtelement 40 dichtend an den Kabeln 20 an, die an den Längsseiten der Anschlußleisten 10 geführt sind. In der Schnittansicht des linken Bereichs von Fig. 2 ist der weitgehend U-förmige Querschnitt der einzelnen Schutzhauben 30 mit einem oberen Deckelabschnitt 32 und seitlichen Wandabschnitten 34 zu erkennen. Die in Fig. 2 sichtbaren Wandabschnitte 34 sind die längsseitigen Wandabschnitte der Schutzhaube 30, die im wesentlichen parallel zu der Längserstreckung der zu schützenden Anschlußleiste 10 verlaufen. An den unteren Rändern 38 der längsseitigen Wandabschnitte 34 ist im Querschnitt das elastische Dichtelement 40 zu erkennen, das um den gesamten Rand umlaufend ausgebildet ist und für die Abdichtung gegen Staub an den Oberflächen des Moduls 10 anliegt.

Wie in Fig. 2 im Querschnitt deutlich wird, durchdringen die Kabel 20 das Dichtelement 40 an den Längsseiten der Anschlußleiste 10, so daß sich an denjenigen Stellen, an denen Kabel aus dem Inneren 36 der Schutzhaube 30 herausgeführt werden, das Dichtelement leicht verformt. Dadurch liegt das Dichtelement sowohl an den Oberflächen des Modules als auch an den Kabeln 20 an, so daß kein Staub und keine aggressive Umgebungsluft eindringen kann. Das gezeigte und beschriebene Dichtelement 40 kann z.B. in Form einer Dichtlippe ausgebildet sein und an die Schutzhaube 30 sowohl geklebt, formschlüssig angesteckt oder im 2K-Spritzgußverfahren eingebracht werden.

Alternativ kann der Rand 38 der Schutzhaube 30 mit einer entsprechenden Kontur versehen sein oder es können von diesem heraustrennbare Teilstücke entfernt worden sein, so daß Kabel durch die Ausbrüche geführt werden können, und eine weitgehende Abdichtung gegen das Eindringen von Staub durch das Zusammenwirken der Kontur oder den Rändern der Ausbrüche mit den Kabeln 20 und den Oberflächen des Moduls 10 erreicht wird.

Dadurch sorgt die erfindungsgemäße Schutzhaube 30 nicht nur für einen wirksamen Schutz gegen Staub, sondern auch gegen sonstige ungünstige Umwelteinflüsse, wie Luftfeuchtigkeit und in der Luft enthaltene aggressive Stoffe, wie z.B. Salz.

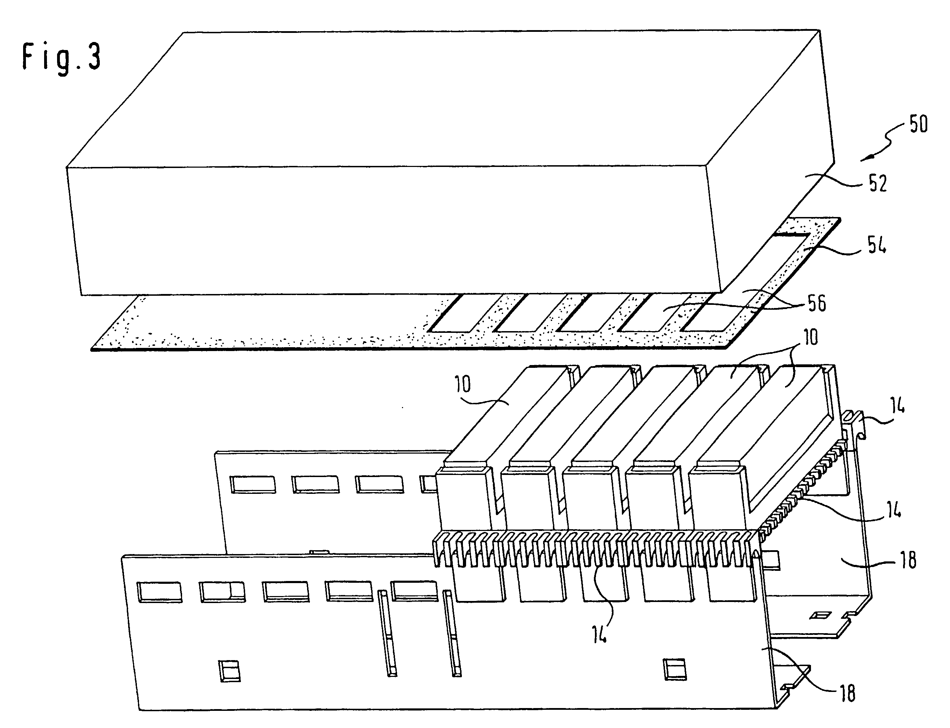

In Fig. 3 ist eine andere Ausführung der erfindungsgemäßen Haube gezeigt, die wiederum der Abdeckung und Abdichtung von mehreren Modulen 10 dient. In der perspektivischen Ansicht von Fig. 3 ist die Anbringung der Module 10 auf wannenartigen Trägern 18 zu erkennen, wobei, wie gezeigt, üblicherweise die länglichen Module 10 zueinander parallel auf die wannenartigen Träger 18 aufgesteckt werden. Es sind ferner an den Modulen 10 ausgebildete seitliche und frontale Kabelführungen 14 gezeigt, über welche die Kabel zu den in den oberen Bereichen der Module 10 befindlichen Kontakte geführt werden.

Dem Schutz dieses Bereichs der Kontakte dient die gezeigte Haube 50, die in dem gezeigten Fall zweistückig ausgebildet ist und aus einem schachtelartigen Körper 52 und einem Dichtungselement 54 besteht. Der Körper 52, der an seiner (nicht gezeigten) Unterseite offen ist, umfaßt im wesentlichen die oberen Bereiche sämtlicher zu schützender Module 10 und deckt die Kontaktbereiche der Module 10 von oben und von den Seiten her gegen das Eindringen von Staub und weitgehend gegen das Eindringen von feuchter Luft ab.

Der Abdichtung von unten dient bei der gezeigten Ausführungsform der Haube 50 das Dichtelement 54, das in Form eines Rahmens mit mehreren Ausnehmungen 56 gestaltet ist. Die Ausnehmungen 56 sind an die Form und Größe der zu schützenden Module 10 derart angepaßt, daß die umlaufenden Ränder der Ausnehmungen 56 im angebrachten Zustand weitgehend dichtend an den Oberflächen der Module 10 anliegen. Alternativ können diejenigen Ränder der Ausnehmungen 56, die sich im angebrachten Zustand der Module 10 und der wannenartigen Träger 18 an den Unterseiten der Module 10 befinden, nicht vollständig dichtend ausgebildet sein, um die Abführung von Kondenswasser, das sich in der Haube oder an den Modulen bei Temperaturschwankungen ablagert, zu ermöglichen. Zumeist werden die gezeigten wannenartigen Träger 18 in Verteilerkästen senkrecht angeordnet, so daß sich die aufgesteckten Module 10 in horizontaler Richtung von den wannenartigen Trägern 18 erstrecken. Dementsprechend ist im angebrachten Zustand die gezeigte Haube 50 derart ausgerichtet, daß ihre (in Fig. 3 oben befindliche) Deckelfläche sich vertikal erstreckend ausgerichtet ist und die gesamte Anordnung aus Modulen 10 und Trägern 18 insbesondere nach vornehin abdeckt.

Aufgrund dieser Anordnung der Haube 50 in einer endgültigen Anbringstellung ist es zweckmäßig, an derjenigen kurzen (sich in Fig. 3 links bzw. rechts befindlichen) Seitenfläche, die sich im Anbringzustand der Haube 50 unten befindet, geeignete Kanäle oder sonstige Einrichtungen auszubilden, die eine gute Abführung von Kondenswasser ermöglichen. Für den Zusammenbau der gezeigten Haube 50 wird der Dichtungsrahmen 54 in dem Rand des Haubenkörpers 52 derart angebracht, daß zwischen dem Rand des Körpers 52 und dem äußeren Rand des Dichtungselements 54 zumindest größtenteils kein Luft- oder Staubdurchtritt mehr möglich ist. Dazu können am Rand des Körpers 52 z.B. zwei umlaufende kurze Leistenabschnitte ausgebildet sein, zwischen die das Dichtungselement 54 eingepaßt wird. Wahlweise können an der Unterseite der Haube, wie erwähnt, Öffnungen oder Kanäle vorgesehen sein, die den Austritt von Kondenswasser gestatten.

Nach der Verbindung des Dichtungselements 54 mit dem Haubenkörper 52 wird die komplette Haube 50 von oben (in Fig. 3 gezeigte Orientierung) bzw. von vorne (in einem endgültigen Anbringzustand im Verteilerkasten) aufgesteckt. Alternativ ist es denkbar, zunächst den Dichtungsrahmen 54 auf die Module aufzuschieben, und nachfolgend den Haubenkörper 52 auf den Dichtungsrahmen 54 aufzustecken und für eine Abdichtung zwischen dem Rand des Haubenkörpers 52 und dem Außenrand des Dichtungselements 54 zu sorgen. Es ist ferner möglich, in dem Fall, daß Arbeiten an den Modulen erforderlich sind, lediglich den Haubenkörper 52 von den Modulen 10 abzunehmen, und das Dichtungselement 54 an den Modulen 10 zu belassen. Dadurch wird erreicht, daß die Abdichtung zwischen den Rändern der Ausnehmungen 56 des Dichtungselements 54 und den Oberflächen der Module 10 nicht zerstört wird. Nach Abschluß der Arbeiten an den Modulen 10 wird der Haubenkörper 52 wieder aufgesteckt und dichtend mit dem Außenrand des Dichtungsrahmens 54 verbunden.

Nach dem Aufstecken liegen in jedem Fall die Ränder der Ausnehmungen 56 des Dichtelements 54 dichtend, wahlweise an den Unterseiten der Module feuchtigkeitsdurchlässig, an, so daß auch aus dem Bereich unterhalb der Module 10 zwischen den wannenartigen Trägern 18 über die zwischen den Modulen 10 befindlichen Spalte kein Zutritt von Staub zu den Kontaktbereichen der Module 10 mehr möglich ist. Darüber hinaus sorgt der Körper 52, in den das Dichtungselement 54 staubdicht eingepaßt ist, für eine Abdeckung der Module 10 gegen Staubeintritt und die Luftzirkulation zu den Kontaktbereichen der Module 10.

Für einen zuverlässigen Schutz gegen den Eintritt von Staub aus den Bereichen zwischen den Modulen 10 ist das Dichtelement 54 bevorzugt elastisch ausgebildet, so daß die Ränder der Ausnehmungen 56, die hinsichtlich ihrer Größe an die zu schützenden Module 10 angepaßt gestaltet sind, sich beim Anliegen an den Oberflächen der Module 10 ein wenig verformen und zuverlässig an den Modulen 10 anliegen. Dabei kann die Verformung sich auch dergestalt einstellen, daß jegliche Kabel, die an den Oberflächen des Moduls 10 anliegend zu den Kontakten des Moduls 10 geführt werden, für eine entsprechende Verformung der Ränder der Ausnehmungen 56 sorgen, die nunmehr abschnittsweise an den Oberflächen des Moduls 10 und abschnittsweise an eingeführten Kabeln anliegen. Durch die elastische Gestaltung des Dichtungselements 54 können sich die Ränder der Ausnehmungen 56 derart an eingeführte Kabel anpassen, daß auch in denjenigen Bereichen, in denen Kabel über die Oberflächen des Moduls 10 eingeführt sind, eine zuverlässige Abdichtung erfolgt.

Die gezeigte Ausführungsform einer Haube 50 ist insbesondere deshalb vorteilhaft, weil als Haubenkörper 52 grundsätzlich bekannte Hauben für Module der Telekommunikationstechnik verwendet werden können. Gemäß der Erfindung wird ein Haubenkörper 52 in vorteilhafter Weise mit einem Dichtungselement 54 verbunden, um erstmalig eine vollständige Abdichtung gegen Staub und Umwelteinflüsse zu erreichen. Ferner ist die erfindungsgemäße Haube 50 so gestaltet, daß Bauteile, wie z.B. Trennstecker und Überspannungsschutzmagazine, die auf die Module 10 aufgesteckt sind, weiterhin verwendet werden können, weil sie im Inneren der Haube 50 bzw. ihres Körpers 52 nach wie vor Platz finden.

## Patentansprüche

1. Haube
- für Module, insbesondere Trenn- oder Anschlussleisten, der Telekommunikationstechnik, die mehrere, in zumindest einer Reihe angeordnete Kontakte aufweisen,
- zur Verhinderung von Luftzirkulation in gefährdeten Bereichen, insbesondere in den Bereichen mit den Kontakten, und zum Schutz der Kontakte vor Staub und/oder Luftfeuchtigkeit, wobei
- die Haube (30, 52) auf zumindest ein Modul (10) aufsteckbar ist und im aufgesteckten Zustand zumindest den Bereich des Moduls mit den Kontakten umfasst, und
- wobei der Haube (30, 52) ein Dichtungselement (40, 54) zugeordnet ist,
- das Dichtungselement (40, 54) in seinen inneren Bereichen weitgehend dichtend an dem Modul (10) oder den Modulen (10) und/oder an zu den Kontakten des Moduls (10) oder der Module (10) führenden Kabeln (20) anliegt.

2. Haube nach Anspruch 1, **dadurch gekennzeichnet, daß** das Dichtungselement (40,54) mit der Haube (30, 52) zweistückig ausgebildet ist, und daß der Rand (38) der Haube (30, 52) weitgehend dichtend an dem Außenrand des Dichtungselements (40, 54) anliegt.

3. Haube nach Anspruch 1 oder 2, **dadurch gekennzeichnet, daß** in dem Dichtungselement (40, 54) zumindest eine Aussparung (56) derart ausgebildet ist, daß die Ränder der Aussparung(en) (56) weitgehend dichtend an dem Modul (10) oder den Modulen (10) und/oder an zu den Kontakten des Moduls (10) oder der Module (10) führenden Kabeln (20) anliegen.

4. Haube nach Anspruch 2 oder 3, **dadurch gekennzeichnet, daß** das Dichtungselement (54) in den Rand der Haube (52) eingepaßt ist.

5. Haube nach zumindest einem der vorhergehenden Ansprüche, **dadurch gekennzeichnet, daß** sämtliche an dem Modul (10) oder den Modulen (10) anliegenden Ränder vollständig dichtend, insbesondere staubdicht anliegen.

6. Haube nach zumindest einem der Ansprüche 1 bis 4, **dadurch gekennzeichnet, daß** zumindest an einem Modul (10) zumindest ein Randabschnitt luft- und insbesondere feuchtigkeitsdurchlässig an dem Modul (10) angeordnet ist.

7. Haube nach Anspruch 6, **dadurch gekennzeichnet, daß** sich der durchlässige Randabschnitt in einer Montagestellung des Moduls (10) an dessen Unterseite befindet.

8. Haube nach zumindest einem der vorhergehenden Ansprüche, **dadurch gekennzeichnet, daß** diese zumindest eine längliche Ausnehmung (36) aufweist, in der im angebrachten Zustand das zu schützende Modul (10) und an dem Modul angebrachte Bauteile, wie z.B. Überspannungsmagazine und Trennstecker aufgenommen sind.

9. Haube nach zumindest einem der vorhergehenden Ansprüche, **dadurch gekennzeichnet, daß** der Rand (38) der Haube (30) im wesentlichen in einer Ebene verläuft.

10. Haube nach zumindest einem der vorhergehenden Ansprüche, **dadurch gekennzeichnet, daß** diese insbesondere in den Bereichen, die im angebrachten Zustand zumindest teilweise an dem zu schützenden Modul (10) anliegen, ein elastisches Dichtelement (40) aufweist.

11. Haube nach Anspruch 10, **dadurch gekennzeichnet, daß** das Dichtelement (40) in Form einer Dichtlippe oder einer Dichtbürste ausgebildet ist.

12. Haube nach Anspruch 10 oder 11, **dadurch gekennzeichnet, daß** das Dichtelement (40) im wesentlichen um den gesamten Rand (38) der Haube (30) umlaufend ausgebildet ist.

13. Haube nach zumindest einem der vorhergehenden Ansprüche, **dadurch gekennzeichnet, daß** diese zumindest in den Bereichen, die im angebrachten Zustand zumindest teilweise mit dem zu schützenden Modul (10) in Berührung stehen und an dem Modul (10) anliegen, herausnehmbare Teilstücke aufweist.

14. Haube nach Anspruch 13, **dadurch gekennzeichnet, daß** die herausnehmbaren Teilstücke hinsichtlich ihrer Größe an die zu dem Kontaktbereich des zu schützenden Moduls (10) führenden Kabel (20) angepaßt sind.

15. Haube nach zumindest einem der vorhergehenden Ansprüche, **dadurch gekennzeichnet, daß** der Rand (38) der Haube (30) eine Kontur aufweist, die abschnittsweise für eine an den Oberflächen des Moduls (10) anliegende Anordnung ausgebildet ist und abschnittsweise die Durchführung von Kabeln (20) zwischen dem Rand (38) der Haube (30) und dem Modul (10) ermöglicht.

16. Haube nach zumindest einem der vorhergehenden Ansprüche, **dadurch gekennzeichnet, daß** in den Bereichen der Haube und/oder des Dichtelements, die an den Oberflächen des Moduls anliegen, eine im Querschnitt labyrinthartige Struktur ausgebildet ist.

17. Haube nach zumindest einem der vorhergehenden Ansprüche, **dadurch gekennzeichnet, daß** diese transparent ausgebildet ist.

18. Haube nach zumindest einem der vorhergehenden Ansprüche, **dadurch gekennzeichnet, daß** diese an einem Bauteil, z.B. einem Überspannungsmagazin, ausgebildet ist, das auf ein Modul (10) aufsteckbar ist.

19. Schutzvorrichtung für mehrere Module der Telekommunikationstechnik mit zumindest einer Haube nach zumindest einem der Ansprüche 1 bis 17.

## Claims

1. Cover
- for modules, in particular isolating or connecting blocks, in telecommunication technology, which have a number of contacts, arranged in at least one row,
- for preventing air circulation in regions at risk, in particular in the regions with the contacts, and for protecting the contacts from dust and/or atmospheric moisture,
- it being possible for the cover (30, 52) to be fitted onto at least one module (10) and, in the fitted-on state, enclosing at least the region of the module with the contacts, and
- a sealing element (40, 54) being assigned to the cover (30, 52),
- the sealing element (40, 54) in its inner regions lying largely with a sealing effect against the module (10) or the modules (10) and/or against cables (20) leading to the contacts of the module (10) or the modules (10).

2. Cover according to Claim 1, **characterized in that** the sealing element (40, 54) is formed with the cover (30, 52) as two parts, and **in that** the edge (38) of the cover (30, 52) lies largely with a sealing effect against the outer edge of the sealing element (40, 54).

3. Cover according to Claim 1 or 2, **characterized in that** at least one clearance (56) is formed in the sealing element (40, 54) in such a way that the edges of the clearance(s) (56) lie largely with a sealing effect against the module (10) or the modules (10) and/or against cables (20) leading to the contacts of the module (10) or the modules (10).

4. Cover according to Claim 2 or 3, **characterized in that** the sealing element (54) is fitted into the edge of the cover (52).

5. Cover according to at least one of the preceding claims, **characterized in that** all the edges lying against the module (10) or the modules (10) lie against it or them with a completely sealing effect, in particular a dusttight effect.

6. Cover according to at least one of Claims 1 to 4, **characterized in that**, at least on one module (10), at least one edge portion is arranged on the module (10) in such a way as to allow air, and in particular moisture, to permeate through.

7. Cover according to Claim 6, **characterized in that** the permeable edge portion is located on the underside of the module (10) in a mounted position of the latter.

8. Cover according to at least one of the preceding claims, **characterized in that** it has at least one elongated clearance (36), in which the module (10) to be protected and components fitted on the module, such as for example surge arrester holders and isolating connectors are accommodated in the fitted state.

9. Cover according to at least one of the preceding claims, **characterized in that** the edge (38) of the cover (30) runs substantially in one plane.

10. Cover according to at least one of the preceding claims, **characterized in that**, in particular in the regions which lie at least partly against the module (10) to be protected in the fitted state, it has an elastic sealing element (40).

11. Cover according to Claim 10, **characterized in that** the sealing element (40) takes the form of a sealing lip or a sealing brush.

12. Cover according to Claim 10 or 11, **characterized in that** the sealing element (40) is formed substantially in such a way that it runs around the entire edge (38) of the cover (30).

13. Cover according to at least one of the preceding claims, **characterized in that**, at least in the regions which are at least partly in contact with the module (10) to be protected in the fitted state, it has removable pieces.

14. Cover according to Claim 13, **characterized in that** the removable pieces are adapted with respect to their size to the cables (20) leading to the contact region of the module (10) to be protected.

15. Cover according to at least one of the preceding claims, **characterized in that** the edge (38) of the cover (30) has a contour which is formed in some portions for an arrangement lying against the surfaces of the module (10) and in some portions permits the leading-through of cables (20) between the edge (38) of the cover (30) and the module (10).

16. Cover according to at least one of the preceding claims, **characterized in that**, in the regions of the cover and/or of the sealing element which lie against the surfaces of the module, a cross-sectionally labyrinthine structure is formed.

17. Cover according to at least one of the preceding claims, **characterized in that** it is transparently formed.

18. Cover according to at least one of the preceding claims, **characterized in that** it is formed on a component, for example a surge arrester holder, which can be fitted onto a module (10).

19. Protective device for a number of modules in telecommunication technology with at least one cover according to at least one of Claims 1 to 17.

## Revendications

1. Capot
- pour modules, notamment des barrettes de déconnexion ou de connexion, dans la technique des télécommunications, lesquels présentent plusieurs contacts disposés dans au moins une rangée,
- pour empêcher la circulation de l'air dans les zones exposées à un danger, notamment dans les zones comprenant les contacts, et pour protéger les contacts contre la poussière et/ou l'humidité,
- le capot (30, 52) pouvant être emboîté sur au moins un module (10) et, en situation emboîtée, entourant au moins la zone du module qui comprend les contacts, et
- un élément d'étanchéité (40, 54) étant associé au capot (30, 52),
- l'élément d'étanchéité (40, 54), dans ses zones intérieures, reposant contre le module (10) ou les modules (10) et/ou contre les câbles (20) qui mènent vers les contacts du module (10) ou des modules (10) de manière largement étanche.

2. Capot selon la revendication 1, **caractérisé en ce que** l'élément d'étanchéité (40, 54) avec le capot (30, 52) est constitué de deux parties et que le bord (38) du capot (30, 52) repose contre le bord extérieur de l'élément d'étanchéité (40, 54) de manière largement étanche.

3. Capot selon la revendication 1 ou 2, **caractérisé en ce que** dans l'élément d'étanchéité (40, 54) est façonné au moins un creux (56) de telle sorte que les bords du ou des creux (56) reposent contre le module (10) ou les modules (10) et/ou contre les câbles (20) qui mènent vers les contacts du module (10) ou des modules (10) de manière largement étanche.

4. Capot selon la revendication 2 ou 3, **caractérisé en ce que** l'élément d'étanchéité (54) est adapté dans le bord du capot (52).

5. Capot selon au moins l'une des revendications précédentes, **caractérisé en ce que** tous les bords qui reposent contre le module (10) ou les modules (10) reposent de manière à réaliser une étanchéité complète, notamment une étanchéité à la poussière.

6. Capot selon au moins l'une des revendications 1 à 4, **caractérisé en ce qu'**au moins sur un module (10) au moins une portion du bord est disposée sur le module (10) de manière perméable à l'air et notamment à l'humidité.

7. Capot selon la revendication 6, **caractérisé en ce que** la portion de bord perméable, dans une position de montage du module (10), se trouve sur le dessous de celui-ci.

8. Capot selon au moins l'une des revendications précédentes, **caractérisé en ce que** celui-ci présente au moins un creux longitudinal (36) dans lequel, en position montée, viennent se loger le module (10) à protéger et des composants montés sur le module, comme par exemple une cartouche de surtension et une fiche de sectionnement.

9. Capot selon au moins l'une des revendications précédentes, **caractérisé en ce que** le bord (38) du capot (30) s'étend pour l'essentiel dans un plan.

10. Capot selon au moins l'une des revendications précédentes, **caractérisé en ce que** celui-ci présente un élément d'étanchéité (40) élastique, notamment dans les zones qui, en position montée, reposent au moins partiellement contre le module (10) à protéger.

11. Capot selon la revendication 10, **caractérisé en ce que** l'élément d'étanchéité (40) est réalisé sous la forme d'une lèvre d'étanchéité ou d'un balais d'étanchéité.

12. Capot selon la revendication 10 ou 11, **caractérisé en ce que** l'élément d'étanchéité (40) est configuré pour l'essentiel de manière à faire le tour de tout lé bord (38) du capot (30).

13. Capot selon au moins l'une des revendications précédentes, **caractérisé en ce que** celui-ci présente des éléments extractibles au moins dans les zones qui, en position montée, sont au moins partiellement en contact avec le module (10) à protéger et reposent contre le module (10).

14. Capot selon la revendication 13, **caractérisé en ce que** les éléments extractibles sont, au niveau de leur taille, adaptés aux câbles (20) qui mènent vers la zone de contact du module (10) à protéger.

15. Capot selon au moins l'une des revendications précédentes, **caractérisé en ce que** le bord (38) du capot (30) présente un contour qui est, par portions, configuré pour un arrangement reposant contre les surfaces du module (10) et, par portions, permet le passage de câbles (20) entre le bord (38) du capot (30) et le module (10).

16. Capot selon au moins l'une des revendications précédentes, **caractérisé en ce qu'**une structure de type labyrinthe en section transversale est formée dans les zones du capot et/ou de l'élément d'étanchéité qui reposent contre la surface du module.

17. Capot selon au moins l'une des revendications précédentes, **caractérisé en ce qu'**il est réalisé transparent.

18. Capot selon au moins l'une des revendications précédentes, **caractérisé en ce qu'**il est réalisé sur un composant, par exemple une cartouche de surtension, qui peut être emboîté sur un module (10).

19. Dispositif de protection pour plusieurs modules de la technique des télécommunications comprenant au moins un capot selon au moins l'une des revendications 1 à 17.
